# EUROPÄISCHE PATENTSCHRIFT

(11) **EP 2 619 473 B1**
(45) Veröffentlichungstag und Bekanntmachung des Hinweises auf die Patenterteilung: **08.07.2015**
(21) Anmeldenummer: 11745974.3
(22) Anmeldetag: 18.08.2011
(51) Int. Cl.: F16D 25/10, F16D 25/0638

(54) **DOPPELSCHALTKUPPLUNG**
DUAL SHIFT COUPLING
EMBRAYAGE DOUBLE

(30) Priorität: 20.09.2010 DE 102010046633
(43) Veröffentlichungstag der Anmeldung: 31.07.2013
(73) Patentinhaber: GKN Stromag AG, 59425 Unna (DE)
(72) Erfinder: RANK, Robert, 59755 Arnsberg (DE); GLOMM, Matthias, 58640 Iserlohn (DE); HAMPEL, Christian, 59423 Unna (DE); HÄSEKER, Thomas, 92283 Lauterhofen (DE)
(74) Vertreter: Wilhelm, Peter
(86) Internationale Anmeldenummer: PCT/EP2011/064204
(87) Internationale Veröffentlichungsnummer: WO 2012/038159

(56) Entgegenhaltungen:
- EP-A1- 1 686 277
- US-A- 2 953 034
- US-A1- 2009 084 652
- Stromag: "Hydraulisch geschaltete Lamellenkupplungen für Schiffsgetriebe", Stromag , 1. Januar 1999 (1999-01-01), XP002662055, Gefunden im Internet: URL:http://www.stromag.de/fileadmin/user_u pload/Dokumente/Produktkataloge/Kupplungen /d228_kms.pdf [gefunden am 2011-10-25] in der Anmeldung erwähnt

## Beschreibung

Die Erfindung betrifft eine Doppelschaltkupplung mit zwei kraftschlüssig wirksamen Kupplungseinheiten, die auf einem gemeinsamen, einstückigen Innenkörper - auf eine Kupplungsdrehachse bezogen - drehfest und axial beweglich gelagert sind, sowie mit einer axial fest zwischen den Kupplungseinheiten angeordneten, auf dem Innenkörper gehaltenen Druckscheibe, die mehrteilig gestaltet ist, und mit zwei axial beweglichen Druckkolben, die mittels jeweils einer im Innenkörper angeordneten Druckfederanordnung lüftbar sind.

Eine derartige Doppelschaltkupplung ist allgemein bekannt (KMS-Katalog der Fa. Stromag AG). Eine derartige Doppelschaltkupplung weist zwei kraftschlüssig wirksame Kupplungseinheiten in Form von Lamellenpaketen auf, die auf einem gemeinsamen und einteiligen Innenkörper gehalten sind. Zwischen den Lamellenpaketen ist auf dem Innenkörper eine Druckscheibe gehalten. Jedes Lamellenpaket ist auf der der Druckscheibe gegenüberliegenden Seite durch einen hydraulisch betätigten Druckkolben beaufschlagbar, der durch Druckfedern gelüftet werden kann. Die Druckfedern sind in Sackbohrungen des Innenkörpers angeordnet, die von gegenüberliegenden axialen Stirnseiten her in den Innenkörper eingebracht sind.

Aufgabe der Erfindung ist es, eine Doppelschaltkupplung der eingangs genannten Art zu schaffen, die eine vereinfachte Herstellung ermöglicht.

Diese Aufgabe wird dadurch gelöst, dass für die Aufnahme der Druckscheibe eine Radialnut im Innenkörper vorgesehen ist, deren radiale Tiefe sich wenigsten bis zu radial innenliegenden Wandungsabschnitten von Aussparungen für die Druckfederanordnungen erstreckt, und dass jede Druckfederanordnung mehrere Druckfedern umfasst, die sich axial innenseitig an der Druckscheibe abstützen. Dadurch, dass die Druckscheibe so tief in den Innenkörper eingefügt ist, dass ihre gegenüberliegenden axialen Stirnflächen, die radial innerhalb der Außenkontur des Innenkörpers positioniert sind, zur Abstützung der Druckfedern dienen können, ist eine vereinfachte Herstellung der Aussparungen für die Druckfederanordnungen ermöglicht. Hierdurch wird die Herstellung des Innenkörpers vereinfacht. Dies erlaubt eine kostengünstige Herstellung der Doppelschaltkupplung. Die erfindungsgemäße Doppelschaltkupplung ist für den Einsatz bei einem Industriegetriebe vorgesehen, insbesondere für einen Antrieb einer Explorationspumpe für die Förderung von Erdöl. Alternativ kann die Erfindung auch im Werkzeugmaschinenbau oder im Nutzfahrzeugbau oder dergleichen vorgesehen sein. Dadurch, dass die Aufnahme für die Druckscheibe und die Aussparungen für die Druckfederanordnungen einander im Innenkörper schneiden, können die Aussparungen axial über die Aufnahme für die Druckscheibe hinaus erstreckt sein. Die Abstützung der Druckfedern direkt an der Druckscheibe gewährleistet eine plane, radial ausgerichtete Abstützfläche, die eine verbesserte Wirkung der Druckfeder ermöglicht.

In Ausgestaltung der Erfindung fluchten die Aussparungen axial gegenüberliegender Druckfedern der beiden Druckfederanordnungen axial miteinander.

In weiterer Ausgestaltung der Erfindung sind alle axial miteinander fluchtenden Aussparungen im Innenkörper jeweils durch den Innenkörper vollständig axial durchsetzende Durchgangsbohrungen gestaltet. Diese Durchgangsbohrungen können in einem Arbeitsgang axial durch den Innenkörper hindurchgebohrt werden. Sacklöcher werden vermieden. Die Durchgangsbohrungen können von beiden axialen Stirnseiten des Innenkörpers her bestückt werden. Dies bedeutet, dass in einer einzigen Durchgangsbohrung von gegenüberliegenden Stirnseiten des Innenkörpers her zwei miteinander fluchtende Druckfedern der einen und der anderen Kupplungseinheit eingebracht werden können, die sich an der gemeinsamen, mittig angeordneten Druckscheibe an gegenüberliegenden axialen Stirnflächen abstützen.

In weiterer Ausgestaltung der Erfindung weist die Druckscheibe wenigstens zwei in Umfangsrichtung aneinanderschließende Druckscheibenabschnitte auf, die radial außenseitig durch einen einteiligen, umlaufenden Trägerring miteinander verbunden sind. Durch diese Ausgestaltung sind die Druckscheibenabschnitte nicht direkt miteinander verbunden, sondern indirekt über den einteiligen, radial außenseitig umlaufenden Trägerring. Die Mehrteiligkeit der Druckscheibe ist notwendig, um eine Montage und Demontage innerhalb der Radialnut des Innenkörpers zu ermöglichen. Die Befestigung der Druckscheibenabschnitte an dem einteiligen Trägerring gewährleistet eine besonders exakte Radialausrichtung der Druckscheibenabschnitte wie auch eine besonders hohe Stabilität und Passgenauigkeit.

In weiterer Ausgestaltung der Erfindung umfasst der Trägerring einen radial nach innen ragenden Befestigungsflansch, an dem die Druckscheibenabschnitte mittels axial wirksamer Befestigungsmittel gehalten sind. Diese Ausgestaltung gewährleistet eine besonders stabile und toleranzarme, verbindungssteife Druckscheibenform.

In besonders vorteilhafter Weise sind als Befestigungsmittel Schraubverbindungen vorgesehen. Neben anderen mechanischen Befestigungsmitteln, die erfindungsgemäß vorgesehen sein können, haben die Schraubverbindungen den Vorteil, dass sie lösbare Verbindungen darstellen. Vorteilhaft sind in dem Trägerring oder in den Druckscheibenabschnitten entsprechende Gewindebohrungen vorgesehen, so dass die Schraubverbindung keine Muttern oder ähnliche Gegenstücke als separate Bauteile benötigen, sondern dass der Einsatz von Schrauben für die Sicherung der Schraubverbindungen ausreichend ist.

Weitere Vorteile und Merkmale der Erfindung ergeben sich aus den Ansprüchen sowie aus der nachfolgenden Beschreibung eines bevorzugten Ausführungsbeispieles der Erfindung, das anhand der Zeichnungen dargestellt ist.
- Fig. 1: zeigt in einer Längsschnittdarstellung eine obere Hälfte einer Ausführungsform einer erfindungsgemäßen Doppelschaltkupplung und
- Fig. 2: in verkleinerter Darstellung einen Querschnitt durch die Doppelschaltkupplung nach Fig. 1 entlang der Schnittlinie II - II in Fig. 1.

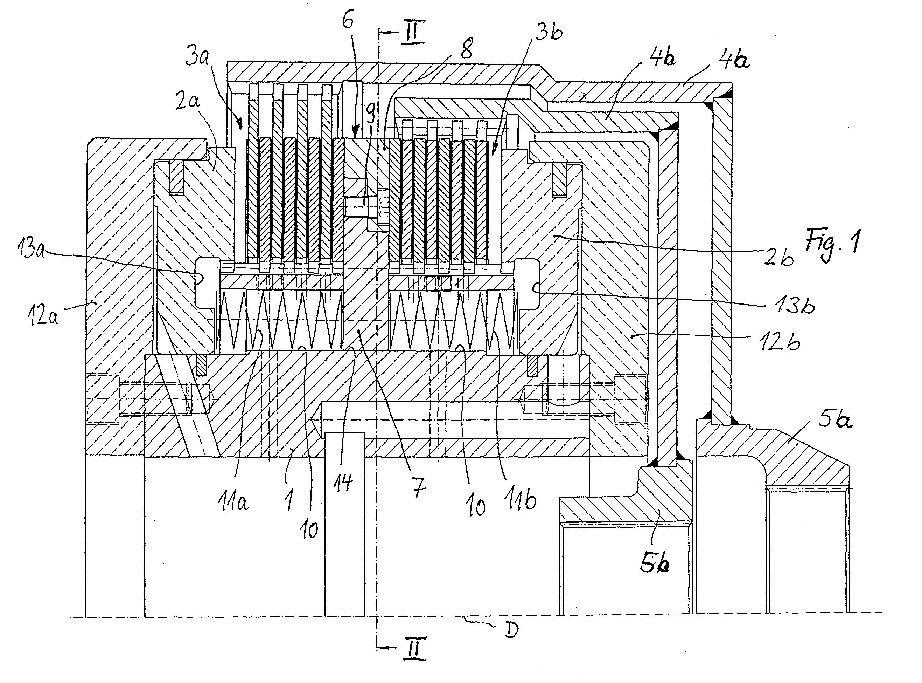

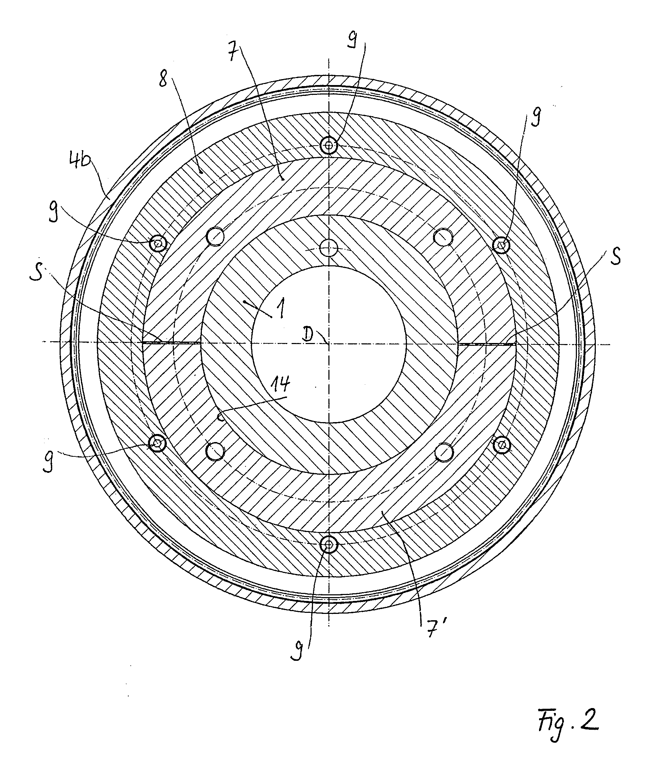

Eine Doppelschaltkupplung nach den Fig. 1 und 2 weist einen einteiligen Innenkörper 1 auf, der auf einer nicht dargestellten Welle festgelegt ist. Der Innenkörper 1 einschließlich der nicht dargestellten Welle dreht sich im Betrieb der Doppelschaltkupplung um eine Kupplungsdrehachse D. Auf dem gemeinsamen Innenkörper 1 sind zwei Kupplungseinheiten 3a und 3b angeordnet, die jeweils als reib- oder kraftschlüssig wirksame Lamellenkupplungen gestaltet sind. Der Innenkörper 1 ist zur drehfesten aber axial beweglichen Halterung von Innenlamellen der beiden Lamellenpakete beider Lamellenkupplungen außenseitig mit Axialverzahnungen versehen, die achsparallel zur Kupplungsdrehachse D ausgerichtet sind. Jedes Lamellenpaket weist axial alternierend zu den Innenlamellen angeordnete Außenlamellen auf, die radial außenseitig mit Außenverzahnungen zur drehfesten aber axial beweglichen Mitnahme an einer innenseitigen Axialverzahnung jeweils einer Kupplungsglocke 4a, 4b versehen sind. Beide Kupplungsglocken 4a und 4b bilden die Kupplungsaußenkörper der jeweiligen Kupplungseinheit 3a und 3b, wobei die Kupplungsglocke 4a der Kupplungseinheit 3a und die Kupplungsglocke 4b der Kupplungseinheit 3b zugeordnet sind. Beide Kupplungsglocken 4a und 4b weisen die gleiche axiale Ausrichtung auf, wobei die Kupplungsglocke 4a die Kupplungsglocke 4b außenseitig überlagert. Demzufolge ist auch das Lamellenpaket der Kupplungseinheit 3a mit einem größeren radialen Durchmesser versehen als das Lamellenpaket der Kupplungseinheit 3b. Beide Kupplungsglocken 4a und 4b sind auf zueinander axial benachbarten Kupplungsnaben 5a und 5b vorgesehen, die axialseitig neben dem Innenkörper 1 positioniert sind. Die beiden Kupplungsnaben 5a und 5b weisen unterschiedliche Durchmesser auf und sind für die Befestigung auf nicht dargestellten Wellen mit unterschiedlichen Durchmessern vorgesehen. Vorzugsweise ist die Kupplungsnabe 5a auf einer Hohlwelle befestigt und die Kupplungsnabe 5b ist auf einer die Hohlwelle koaxial durchdringenden Welle gehalten.

Um die Lamellenpakete der Kupplungseinheiten 3a und 3b mit Druck zu beaufschlagen, ist der Kupplungseinheit 3a ein Druckkolben 2a und der Kupplungseinheit 3b ein Druckkolben 2b zugeordnet. Die beiden Druckkolben 2a und 2b sind an gegenüberliegenden axialen Endbereichen des Innenkörpers 1 auf diesem verschiebbar angeordnet. Jedem Druckkolben 2a, 2b ist zudem ein Gehäuseabschnitt 12a, 12b zugeordnet, der auf der jeweiligen axialen Stirnseite mit dem Innenkörper 1 verschraubt ist und den Druckkolben 2a radial außenseitig führt und dichtet. Die Druckkolben 2a, 2b werden durch Druckfederanordnungen 11a und 11 b in ihren gelüfteten Positionen gemäß Fig. 1 gehalten. Die eine Druckfederanordnung 11a ist der Kupplungseinheit 3a und die andere Druckfederanordnung 11 b der Kupplungseinheit 3b zugeordnet. Beide Druckfederanordnungen 11a, 11 b weisen mehrere Schraubendruckfedern auf, die über den Umfang des Druckkolbens 2a, 2b verteilt angeordnet sind. Die Schraubendruckfedern sind in Aussparungen 10 des Innenkörpers 1 angeordnet, die sich achsparallel zu der Kupplungsdrehachse D von einer axialen Stirnseite des Innenkörpers 1 her durch den gesamten Innenkörper 1 axial hindurch bis zu seiner axial gegenüberliegenden Stirnseite erstrecken. Über den Umfang des Innenkörpers 1 verteilt sind mehrere Aussparungen 10 vorgesehen, die identisch ausgeführt sind.

Die Schraubendruckfedern der Druckfederanordnungen 11a und 11 b stützen sich axial innenseitig an einer gemeinsamen Druckscheibe 6 ab, die in eine Radialnut 14 (Fig. 2) des Innenkörpers 1 eingepasst ist. Wie anhand der Fig. 1 erkennbar ist, schneidet die Radialnut 14 die als Durchgangsbohrungen gestalteten Aussparungen 10 derart, dass ein Boden der Radialnut 14 mit einer radial innenseitigen Wandung jeder Durchgangsbohrung 10 fluchtet. Die Schraubendruckfedern stützen sich demzufolge vollflächig an der in der Zeichnung gemäß Fig. 1 rechts- oder linksseitigen Stirnfläche der Druckscheibe 6 ab.

Um die Druckscheibe 6 in der Radialnut des Innenkörpers 1 montieren zu können, weist die Druckscheibe 6 zwei Druckscheibenabschnitte 7, 7' auf, die jeweils als Ringhälften gestaltet sind. Die beiden Ringhälften sind auf Stoß (Bezugszeichen S in Fig. 2) aneinandergefügt, so dass sie einen gemeinsamen Druckscheibenring ergeben. Die beiden Druckscheibenabschnitte 7, 7'sind durch einen kreisförmig umlaufenden, einteiligen Trägerring 8 miteinander verbunden. Hierzu weist der Trägerring 8 einen radial nach innen ragenden, nicht näher bezeichneten Befestigungsflansch auf. Die Druckscheibenabschnitte 7, 7' weisen korrespondierende, radial nach außen ragende Schulterbereiche auf, die mit Gewindebohrungen versehen sind (Fig. 1). In diese Gewindebohrungen sind Kopfschrauben 9 einschraubbar, die in dem Besfestigungsflansch des Trägerringe 8 versenkt sind. Die Kopfschrauben 9 sind achsparallel zur Kupplungsdrehachse D und damit axial ausgerichtet. Demzufolge sind auch die Gewindebohrungen mit axialen Gewindeachsen versehen.

## Patentansprüche

1. Doppelschaltkupplung mit zwei kraftschlüssig wirksamen Kupplungseinheiten (3a, 3b), die auf einem gemeinsamen, einstückigen Innenkörper (1) - auf eine Kupplungsdrehachse bezogen - drehfest und axial beweglich gelagert sind, sowie mit einer axial fest zwischen den Kupplungseinheiten angeordneten, auf dem Innenkörper (1) gehaltenen Druckscheibe (6), die mehrteilig gestaltet ist, und mit zwei axial beweglichen Druckkolben (2a, 2b), die mittels jeweils einer im Innenkörper (1) angeordneten Druckfederanordnung (11a, 11 b) lüftbar sind, **dadurch gekennzeichnet, dass** für die Aufnahme der Druckscheibe (6) eine Radialnut (14) im Innenkörper (1) vorgesehen ist, deren radiale Tiefe sich wenigstens bis zu radial innenliegenden Wandungsabschnitten von Aussparungen (10) für die Druckfederanordnungen (11 a, 11 b) erstreckt, und dass jede Druckfederanordnung (11 a, 11 b) mehrere Druckfedern umfasst, die sich axial innenseitig an der Druckscheibe (6) abstützen.

2. Doppelschaltkupplung nach Anspruch 1, **dadurch gekennzeichnet, dass** die Aussparung (10) axial gegenüberliegender Druckfedern der beiden Druckfederanordnungen (11a, 11 b) axial miteinander fluchten.

3. Doppelschaltkupplung nach Anspruch 2, **dadurch gekennzeichnet, dass** alle axial miteinander fluchtenden Aussparungen (10) im Innenkörper (1) jeweils durch den Innenkörper vollständig axial durchsetzende Durchgangsbohrungen gestaltet sind.

4. Doppelschaltkupplung nach Anspruch 1, **dadurch gekennzeichnet, dass** die Druckscheibe (6) wenigstens zwei in Umfangsrichtung aneinanderschließende Druckscheibenabschnitte (7, 7') aufweist, die radial außenseitig durch einen einteiligen, umlaufenden Trägerring (8) miteinander verbunden sind.

5. Doppelschaltkupplung nach Anspruch 4, **dadurch gekennzeichnet, dass** der Trägerring (8) einen radial nach innen ragenden Befestigungsflansch umfasst, an dem die Druckscheibenabschnitte (7, 7') mittels axial wirksamer Befestigungsmittel (9) gehalten sind.

6. Doppelschaltkupplung nach Anspruch 5, **dadurch gekennzeichnet, dass** als Befestigungsmittel (9) Schraubverbindungen vorgesehen sind.

## Claims

1. A dual clutch having two positively acting clutch units (3a, 3b) which are mounted in a rotationally fixed and axially movable manner, in relation to a clutch rotational axis, on a common, single-piece inner body (1), and having a pressure disk (6) which is arranged in an axially fixed manner between the clutch units, is held on the inner body (1) and is of multiple-piece design, and having two axially movable pressure pistons (2a, 2b) which can be ventilated by means of in each case one compression spring arrangement (11 a, 11 b) which is arranged in the inner body (1), **characterized in that** a radial groove (14) is provided in the inner body (1) in order to receive the pressure disk (6), the radial depth of which radial groove extends at least as far as radially inner wall sections of cutouts (10) for the compression spring arrangements (11 a, 11 b), and **in that** each compression spring arrangement (11 a, 11 b) comprises a plurality of compression springs which are supported axially on the inside on the pressure disk (6).

2. The dual clutch according to claim 1, **characterized in that** the cutout (10) of axially opposite compression springs of the two compression spring arrangements (11a, 11 b) are aligned axially with one another.

3. The dual clutch according to claim 2, **characterized in that** all the cutouts (10) which are aligned axially with one another in the inner body (1) are formed in each case by through holes which penetrate the inner body completely axially.

4. The dual clutch according to claim 1, **characterized in that** the pressure disk (6) has at least two pressure disk sections (7, 7') which adjoin one another in the circumferential direction and are connected to one another radially on the outside by a single-piece, circumferential carrier ring (8).

5. The dual clutch according to claim 4, **characterized in that** the carrier ring (8) comprises a radially inwardly projecting fastening flange, on which the pressure disk sections (7, 7') are held by means of axially acting fastening means (9).

6. The dual clutch according to claim 5, **characterized in that** screw connections are provided as fastening means (9).

## Revendications

1. Embrayage double avec deux unités d'embrayage (3a, 3b) actives par adhérence, qui sont montées de façon calée en rotation et mobile axialement - par rapport à un axe de rotation de l'embrayage - sur un corps intérieur commun (1) en une seule pièce, ainsi qu'avec un disque de pression (6) maintenu sur le corps intérieur (1) et immobilisé axialement entre les unités d'embrayage, qui est constitué en plusieurs parties, et avec deux pistons de pression (2a, 2b) mobiles axialement, qui peuvent respectivement être éventés au moyen d'un agencement de ressorts de pression (11 a, 11 b) disposé dans le corps intérieur (1), **caractérisé en ce qu'**il est prévu dans le corps intérieur (1), pour le logement du disque de pression (6), une rainure radiale (14), dont la profondeur radiale s'étend au moins jusqu'à des parties de paroi radialement intérieures d'évidements (10) pour les agencements de ressorts de pression (11 a, 11b), et **en ce que** chaque agencement de ressorts de pression (11a, 11b) comprend plusieurs ressorts de pression, qui prennent appui axialement côté intérieur sur le disque de pression (6).

2. Embrayage double selon la revendication 1, **caractérisé en ce que** les évidements (10) de ressorts de pression axialement opposés des deux agencements de ressorts de pression (11a, 11b) sont alignés axialement l'un avec l'autre.

3. Embrayage double selon la revendication 2, **caractérisé en ce que** tous les évidements (10) alignés axialement l'un avec l'autre dans le corps intérieur (1) sont configurés respectivement par des alésages de passage traversant axialement entièrement le corps intérieur.

4. Embrayage double selon la revendication 1, **caractérisé en ce que** le disque de pression (6) présente au moins deux parties de disque de pression (7, 7') se raccordant l'une à l'autre en direction périphérique, qui sont assemblées l'une à l'autre sur le côté radialement extérieur par une bague de support périphérique (8) en une seule pièce.

5. Embrayage double selon la revendication 4, **caractérisé en ce que** la bague de support (8) comprend une bride de fixation en saillie radialement vers l'intérieur, sur laquelle les parties de disque de pression (7, 7') sont maintenues au moyen de moyens de fixation (9) agissant axialement.

6. Embrayage double selon la revendication 5, **caractérisé en ce qu'**il est prévu des assemblages vissés comme moyens de fixation (9).
